# FASCICULE DE BREVET EUROPEEN

(11) **EP 2 597 541 B1**
(45) Date de publication et mention de la délivrance du brevet: **13.12.2017**
(21) Numéro de dépôt: 12193539.9
(22) Date de dépôt: 21.11.2012
(51) Int. Cl.: G05B 19/042, G05B 19/05, G05B 19/418, G06F 1/12

(54) **Procédé de gestion de la synchronisation d'un système distribué d'enregistrement d'événements horodatés**
Verfahren zur Steuerung der Synchronisation eines verteilten Aufzeichnungssystems von mit Zeitstempel versehenen Ereignissen
Method for managing the synchronisation of a distributed system for recording time-stamped events

(30) Priorité: 24.11.2011 FR 1160754
(43) Date de publication de la demande: 29.05.2013
(73) Titulaire: Schneider Electric Industries SAS, 92500 Rueil-Malmaison (FR)
(72) Inventeur: Eyraud, Annick, 06600 Antibes (FR); Chevalier, Laurent, 06510 Mougin (FR); Arod, Etienne, 06600 Antibes (FR)
(74) Mandataire: Dufresne, Thierry

(56) Documents cités:
- JP-A- 2010 272 071
- Meinberg Funkuhren GmbH & Co. KG: "Schaltsekunden und deren Auswertung durch Funkuhren und NTP", Internet, 30 octobre 2005 (2005-10-30), XP002681196, Extrait de l'Internet: URL:http://www.meinberg.de/german/info/lea p-second.htm [extrait le 2012-08-02]
- Brandt, J.: "Verteilte Systeme - 3. Übung Sommersemester 2011", Technische Universität Braunschweig, Institut für Betriebssysteme und Rechnerverbund, 7 juin 2011 (2011-06-07), XP002681197, Extrait de l'Internet: URL:https://www.ibr.cs.tu-bs.de/courses/ss 11/vs/material/vs-ss11-u3-folien.pdf?lang= de [extrait le 2012-08-02]

## Description

### Domaine technique de l'invention

La présente invention se rapporte à des systèmes présentant des dispositifs d'enregistrement d'événements horodatés et, plus précisément, concerne la gestion de la synchronisation de ces dispositifs sur une horloge de référence.

### Etat de la technique

De manière connue, dans des systèmes complexes comprenant des moyens d'enregistrement distribués d'événements localement horodatés, il est en général nécessaire de synchroniser à intervalle régulier les moyens locaux d'horodatage sur une horloge de référence. En effet, les moyens d'enregistrement distribués d'événements localement horodatés comprennent chacun une horloge locale ; les horloges locales n'étant en principe pas parfaitement synchrones, elles doivent être régulièrement resynchronisées sur l'heure de référence donnée par une horloge de référence.

Ainsi, par exemple, le document US20110066598A1 décrit un système d'horodatage synchronisé directement ou indirectement sur le temps GPS, c'est-à-dire le temps universel donné par le système de navigation par satellites GPS, pour Global Positionning System selon l'acronyme anglais, et contenu dans les messages GPS que les satellites de la constellation GPS broadcastent à intervalle régulier.

Le document EP11263341A1 décrit également un système comprenant des moyens distribués d'horodatage et d'enregistrement d'événements horodatés, lesdits moyens distribués d'horodatage et d'enregistrement d'événements horodatés étant régulièrement synchronisés sur le temps GPS.

L'inconvénient majeur lié aux systèmes connus réside dans le fait qu'ils ne sont pas en mesure d'assurer la cohérence de l'ordre chronologique dans lequel les événements horodatés sont enregistrés lors d'une synchronisation des moyens d'horodatage locaux.

En effet, les moyens locaux d'horodatage comprennent des horloges locales donnant une heure locale. Si, lors d'une synchronisation desdites horloges locales sur l'horloge de référence, l'une des horloges locales se trouve "en avance" sur l'horloge de référence, les enregistrements d'événements horodatés postérieurs à la synchronisation peuvent être réalisés avec un temps d'horodatage antérieur à celui associé à des événements survenus avant ladite synchronisation.

Les documents Meinberg Funkuhren GmbH & Co. KG: "Schaltsekunden und deren Auswertung durch Funkuhren und NTP", JP2010272071A et Brandt, J.: "Verteilte Systeme - 3. Übung Sommersemester 2011 ", Technische Universität Braunschweig divulguent également des procédés de synchronisation d'une horloge locale.

Le but de l'invention est donc de résoudre ce problème et de proposer un système présentant des dispositifs d'enregistrement d'événements horodatés qui soient capables, de manière autonome, d'enregistrer dans l'ordre chronologique les événements horodatés, y compris lors d'une synchronisation des moyens locaux d'horodatage, et même lorsque leur horloge locale était en avance sur l'horloge de référence avant la synchronisation.

### Exposé de l'invention

A cet effet, l'invention consiste en un procédé de gestion de la synchronisation d'un système distribué d'enregistrement d'événements horodatés à une fréquence donnée correspondant à un temps de cycle, comprenant :
- une horloge locale présentant une heure locale propre ;
- une horloge de référence présentant une heure de référence,
un dernier temps d'horodatage étant associé au dernier enregistrement d'un événement.

Le procédé selon l'invention se caractérise par le fait que, lors d'une synchronisation de ladite horloge locale sur ladite horloge de référence, ladite heure locale propre devenant une nouvelle heure locale égale à l'heure de référence :
- si la nouvelle heure locale synchronisée est inférieure au dernier temps d'horodatage, l'heure utilisée comme temps d'horodatage pour le prochain enregistrement d'événement est égale au dernier temps d'horodatage augmenté d'un pas d'incrément inférieur au temps de cycle, jusqu'à ce que la nouvelle heure locale soit supérieure ou égale audit dernier temps d'horodatage ; puis, l'heure utilisée comme temps d'horodatage pour les enregistrements d'événements suivants est égale à la nouvelle heure locale ;
- si la nouvelle heure locale synchronisée est supérieure ou égale au dernier temps d'horodatage, l'heure utilisée comme temps d'horodatage pour les prochains enregistrements d'événements est égale à la nouvelle heure locale.

Le pas d'incrément peut par exemple être égal à une milliseconde.

Le temps de cycle peut par exemple être égal à cinq millisecondes.

Avantageusement, le pas d'incrément peut correspondre à la résolution de l'horloge locale propre.

On rappelle ici que l'on entend par "résolution" de l'horloge locale propre la plus petite fraction de temps que ladite horloge locale propre est capable de mesurer.

L'invention consiste également en un système comprenant au moins un dispositif d'enregistrement d'événements horodatés comprenant une horloge locale, ledit système comprenant une horloge de référence, ainsi que des moyens de synchronisation de ladite horloge locale sur ladite horloge de référence, ledit système selon l'invention comprenant des moyens pour mettre en oeuvre le procédé décrit précédemment.

Avantageusement, ledit système est par ailleurs connecté à un serveur de temps SNTP, pour Simple Network Time Protocol selon l'acronyme anglais usuel, synchronisé sur le temps GPS, c'est-à-dire le temps donné par le système de navigation par satellites GPS, et l'horloge de référence présente le temps GPS comme heure de référence.

Avantageusement, le système peut alternativement comprendre des moyens de réception de messages GPS, c'est-à-dire de messages émis par le système de navigation par satellites GPS, et des moyens de décodage de ces messages GPS pour en extraire le temps GPS, l'horloge de référence présentant le temps GPS comme heure de référence.

Avantageusement, le système selon l'invention peut comprendre une pluralité d'horloges locales.

### Brève description des figures

D'autres caractéristiques et avantages vont apparaître dans la description détaillée qui suit faite en regard des dessins annexés qui représentent :
- la figure 1 : un schéma simple représentant le principe de l'horodatage distribué d'événements ;
- la figure 2 : le schéma bloc illustrant le principe du procédé selon l'invention ;
- la figure 3 : un exemple de mise en oeuvre du procédé selon l'invention illustrant la durée du mode transitoire induit au moment de la synchronisation d'une horloge locale donnant une heure locale postérieure à l'heure de référence au moment de ladite synchronisation.

### Description détaillée d'au moins un mode de réalisation

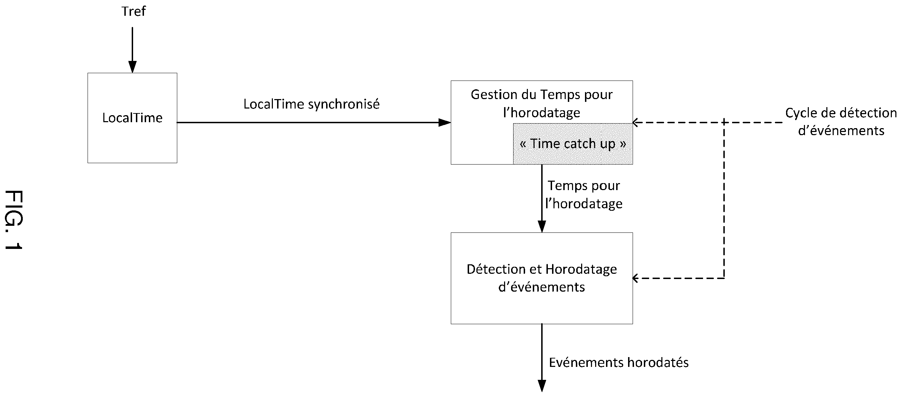

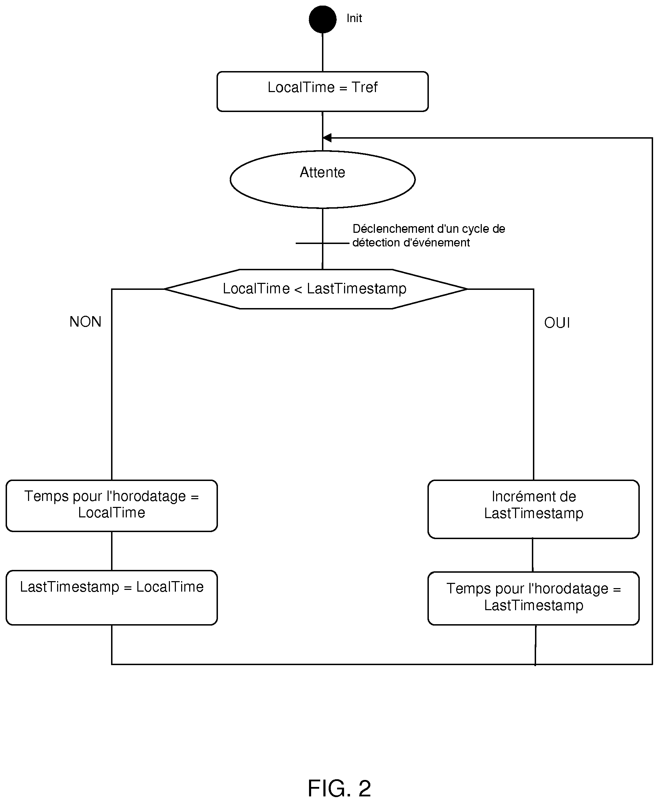

L'invention concerne un système distribué d'enregistrement d'événements horodatés en temps réel, comme cela est représenté à la figure 1. Un tel système comprend une pluralité d'horloges locales dont la fonction est de donner le temps d'horodatage local - "LocalTime" sur la figure 1 - pour horodater les événements à enregistrer. Ces horloges locales donnant le temps local "LocalTime" doivent être régulièrement synchronisées sur une horloge de référence, donnant un temps de référence Tref, généralement le temps GPS, et l'invention concerne la gestion de cette synchronisation. Le temps local "LocalTime" synchronisé est communiqué à la fonction "Gestion du Temps pour l'horodatage" chargée de décider l'heure utilisée pour horodater des événements détectés lors d'un "Cycle de détection d'événements". C'est au sein de cette fonction que le procédé selon l'invention, appelé mécanisme de "Time catch up" sur la figure 1, est mis en oeuvre. Après avoir décidé de l'heure effectivement utilisée pour l'horodatage des événements détectés, selon le mécanisme décrit à la figure 2, la fonction "Détection et Horodatage d'événements" peut être pleinement mise en oeuvre, fournissant en sortie lesdits "Evénements horodatés".

La figure 2 est un schéma permettant de décrire le fonctionnement du procédé, et par conséquent du système, selon la présente invention.

Après une phase d'initialisation "Init", une synchronisation des horloges locales est effectuée. Sur la figure 2, "LocalTime" désigne l'heure locale donnée par l'horloge locale considérée ; Tref est l'heure de référence, par exemple l'heure GPS donnée par un serveur SNTP. Après une phase d' "Attente" survient le "Déclenchement d'un cycle de détection d'événement", c'est-à-dire qu'un nouvel événement doit être horodaté et enregistré par le système. La détection et l'horodatage / enregistrement d'un événement sont réalisés par le système considéré de manière périodique, à une fréquence donnée correspondant à un temps de cycle, par exemple égal à 5 ms.

A ce stade, la présente invention permet une gestion améliorée de la transition induite par la remise à l'heure de l'horloge locale considérée. En effet, le procédé selon l'invention prévoit de tester si l'heure locale nouvellement synchronisée, "LocalTime" sur la figure 2, est inférieure ou non au dernier temps d'horodatage utilisé pour horodater le dernier événement enregistré avant la synchronisation, ce dernier temps d'horodatage étant appelé "LastTimeStamp" sur la figure 2.

S'il est vérifié que le "LocalTime" est inférieur au "LastTimeStamp", alors le temps utilisé pour horodater le nouvel événement à enregistrer, appelé "Temps pour l'horodatage" sur la figure 2, n'est pas égal audit "LocalTime", mais il est égal au "LastTimeStamp" augmenté d'un pas d'incrément inférieur au temps de cycle, de préférence le plus petit possible. Ce pas d'incrément peut typiquement être égal à 1 ms.

L'opération est réitérée tant que le "LocalTime" est inférieur au "LastTimeStamp". Dès lors que le "LocalTime" devient supérieur ou égal au "LastTimeStamp" au moment de la détection d'un nouvel événement à horodater / enregistrer, le système utilise de manière normale l'heure locale "LocalTime" pour horodater ledit nouvel événement et les événements suivants.

En procédant de cette façon, il est garanti que les événements à horodater et à enregistrer le seront dans un ordre chronologique croissant.

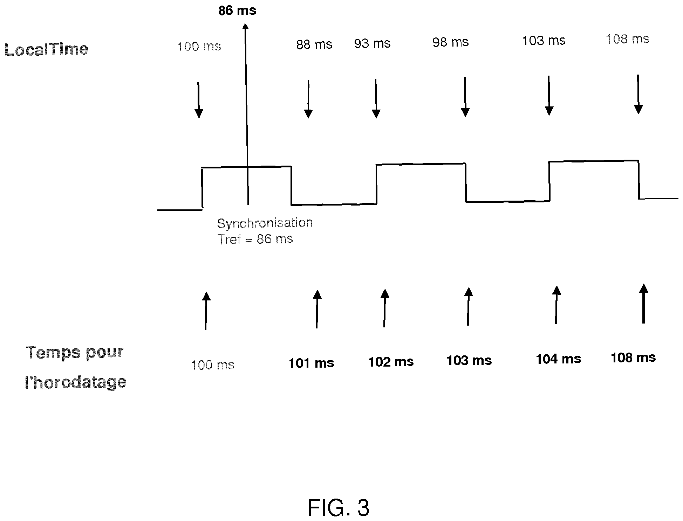

La figure 3 donne un exemple chiffré de mise en oeuvre de la présente invention : l'heure locale donnée par l'horloge locale considérée, "LocalTime" sur la figure 3 comme sur la figure 2, est initialement égale à 100 ms, correspondant au temps utilisé pour horodater un dernier événement - "LastTimeStamp" sur la figure 2 - avant la synchronisation qui ramène l'heure locale à 86 ms.

Le temps de cycle est, dans cet exemple, égal à 5 ms.

On applique alors les étapes du procédé selon l'invention décrites à la figure 2 : le "LocalTime" synchronisé étant initialement inférieur au "LastTimeStamp", lors des cycles de détection suivant la synchronisation, le temps utilisé pour horodater les événements à horodater / enregistrer est égal au "LastTimeStamp" augmenté d'un pas d'incrément, d'1 ms dans l'exemple de la figure 3.

Après quatre cycles pour lesquels le temps utilisé pour l'horodatage n'est pas égal au temps local - ou "LocalTime" - réel, ledit "LocalTime" devient supérieur au "LastTimeStamp", et le procédé selon l'invention prévoit alors de recommencer à utiliser le "LocalTime" réel comme temps d'horodatage pour l'horodatage des événements suivants, lors des temps de cycle suivants.

Dans cet exemple chiffré, la durée de la transition induite par la synchronisation peut être calculée ; elle est égale à (100 - 86) * 5 / 4 = 17,5 ms, où 100 ms est le "LastTimeStamp" avant synchronisation, 86 ms est le temps de référence utilisé lors de la synchronisation, 5 ms est le temps de cycle, et 4 est le nombre de cycles nécessaires avant que le "LocalTime" ne devienne supérieur au "LastTimeStamp".

En résumé, l'invention permet la gestion de la synchronisation d'horloges locales sur une horloge de référence dans un système distribué d'horodatage et d'enregistrement d'événements horodatés. La présente invention présente l'avantage de faire en sorte que les événements horodatés soient automatiquement enregistrés dans un ordre chronologique croissant, même lorsque les horloges locales considérées étaient en avance sur l'horloge de référence au moment de la synchronisation.

Il est précisé que la présente invention couvre aussi bien le procédé que le système comprenant les moyens pour mettre en oeuvre ledit procédé.

## Revendications

1. Procédé de gestion de la synchronisation d'un système distribué d'enregistrement d'événements horodatés à une fréquence donnée correspondant à un temps de cycle, comprenant :
- une horloge locale présentant une heure locale propre ;
- une horloge de référence présentant une heure de référence (Tref),
un dernier temps d'horodatage (LastTimestamp) étant associé au dernier enregistrement d'un événement,
**caractérisé en ce que**, lors d'une synchronisation de ladite horloge locale sur ladite horloge de référence, ladite heure locale propre devenant une nouvelle heure locale égale à l'heure de référence (Tref) :
- si la nouvelle heure locale synchronisée est inférieure au dernier temps d'horodatage (LastTimestamp), l'heure utilisée comme temps d'horodatage pour le prochain enregistrement d'événement est égale au dernier temps d'horodatage augmenté d'un pas d'incrément inférieur au temps de cycle, jusqu'à ce que la nouvelle heure locale soit supérieure ou égale audit dernier temps d'horodatage ; puis, l'heure utilisée comme temps d'horodatage pour les enregistrements d'événements suivants est égale à la nouvelle heure locale ;
- si la nouvelle heure locale synchronisée est supérieure ou égale au dernier temps d'horodatage (LastTimestamp), l'heure utilisée comme temps d'horodatage pour les prochains enregistrements d'événements est égale à la nouvelle heure locale.

2. Procédé selon la revendication 1, **caractérisé en ce que** le pas d'incrément est égal à une milliseconde.

3. Procédé selon l'une des revendications précédentes, **caractérisé en ce que** le temps de cycle est égal à cinq millisecondes.

4. Procédé selon l'une des revendications précédentes, **caractérisé en ce que** le pas d'incrément correspond à la résolution de l'horloge locale propre.

5. Système comprenant au moins un dispositif d'enregistrement d'événements horodatés comprenant une horloge locale, ledit système comprenant une horloge de référence, ainsi que des moyens de synchronisation de ladite horloge locale sur ladite horloge de référence, **caractérisé en ce qu'**il comprend des moyens pour mettre en oeuvre le procédé selon l'une quelconque des revendications 1 à 4.

6. Système selon la revendication 5, ledit système étant par ailleurs connecté à un serveur de temps de type SNTP, pour Simple Network Time Protocol selon l'acronyme anglais usuel, synchronisé sur le temps GPS, c'est-à-dire le temps donné par le système de navigation par satellites GPS, pour Global Positioning System selon l'acronyme anglais, et l'horloge de référence présentant le temps GPS comme heure de référence (Tref).

7. Système selon la revendication 5, **caractérisé en ce qu'**il comprend des moyens de réception de messages GPS, c'est-à-dire de messages émis par le système de navigation par satellites GPS, pour Global Positioning System selon l'acronyme anglais, et des moyens de décodage de ces messages GPS pour en extraire le temps GPS, l'horloge de référence présentant le temps GPS comme heure de référence (Tref).

8. Système selon l'une des revendications 5 à 7, comprenant une pluralité d'horloges locales.

## Patentansprüche

1. Verfahren zur Steuerung der Synchronisation eines verteilten Systems zur Aufzeichnung von zeitgestempelten Ereignissen mit einer gegebenen Frequenz entsprechend einer Zykluszeit, umfassend:
- eine lokale Uhr, die eine eigene Lokalzeit darstellt;
- eine Referenzuhr, die eine Referenzzeit (Tref) darstellt;
wobei ein letzter Zeitstempel (LastTimestamp) der letzten Aufzeichnung eines Ereignisses zugeordnet wird,
**dadurch gekennzeichnet, dass** bei einer Synchronisation der lokalen Uhr mit der Referenzuhr, die eigene Lokalzeit eine neue Lokalzeit gleich der Referenzzeit (Tref) wird:
- wenn die neue synchronisierte Lokalzeit kleiner als der letzte Zeitstempel (LastTimestamp) ist, ist die als Zeitstempel für die nächste Aufzeichnung eines Ereignisses verwendete Zeit gleich dem letzten Zeitstempel, erhöht um einen Inkrementschritt kleiner als die Zykluszeit, bis die neue Lokalzeit größer oder gleich dem letzten Zeitstempel ist; dann ist die als Zeitstempel für die Aufzeichnungen von folgenden Ereignissen verwendete Zeit gleich der neuen Lokalzeit;
- wenn die neue synchronisierte Lokalzeit größer oder gleich dem letzten Zeitstempel (LastTimestamp) ist, ist die als Zeitstempel für die nächsten Aufzeichnungen von Ereignissen verwendete Zeit gleich der neuen Lokalzeit.

2. Verfahren nach Anspruch 1, **dadurch gekennzeichnet, dass** der Inkrementschritt gleich einer Millisekunde ist.

3. Verfahren nach einem der vorhergehenden Ansprüche, **dadurch gekennzeichnet, dass** die Zykluszeit gleich fünf Millisekunden ist.

4. Verfahren nach einem der vorhergehenden Ansprüche, **dadurch gekennzeichnet, dass** der Inkrementschritt der Auflösung der eigenen lokalen Uhr entspricht.

5. System, umfassend mindestens eine Vorrichtung zur Aufzeichnung von zeitgestempelten Ereignissen, umfassend eine lokale Uhr, wobei das System eine Referenzuhr sowie Mittel zur Synchronisation der lokalen Uhr mit der Referenzuhr umfasst, **dadurch gekennzeichnet, dass** es Mittel umfasst, um das Verfahren nach einem der Ansprüche 1 bis 4 einzusetzen.

6. System nach Anspruch 5, wobei das System überdies an einen Zeitserver vom Typ SNTP, für Simple Network Time Protocol gemäß dem üblichen englischen Akronym, angeschlossen ist, der mit der GPS-Zeit synchronisiert ist, d. h. der Zeit, die von dem Satellitennavigationssystem GPS, für Global Positioning System gemäß dem englischen Akronym, vorgegeben ist, und wobei die Referenzuhr die GPS-Zeit als Referenzzeit (Tref) darstellt.

7. System nach Anspruch 5, **dadurch gekennzeichnet, dass** es Mittel zum Empfang von GPS-Nachrichten, d. h. Nachrichten, die von dem Satellitennavigationssystem GPS, für Global Positioning System gemäß dem englischen Akronym, gesandt werden, und Mittel zur Decodierung dieser GPS-Nachrichten umfasst, um daraus die GPS-Zeit zu entnehmen, wobei die Referenzuhr die GPS-Zeit als Referenzzeit (Tref) darstellt.

8. System nach einem der Ansprüche 5 bis 7, umfassend eine Vielzahl von lokalen Uhren.

## Claims

1. Method for managing the synchronization of a distributed system for recording events that are time-stamped at a given frequency corresponding to a cycle time, comprising:
- a local clock exhibiting its own inherent local time;
- a reference clock exhibiting a reference time (Tref),
a last time-stamping time (LastTimestamp) being associated with the last recording of an event,
**characterized in that**, upon a synchronization of said local clock to said reference clock, said inherent local time becoming a new local time equal to the reference time (Tref):
- if the new synchronized local time is less than the last time-stamping time (LastTimestamp), the time used as time-stamping time for the next event recording is equal to the last time-stamping time plus an increment span of less than the cycle time, until the new local time is greater than or equal to said last time-stamping time; then, the time used as time-stamping time for the following event recordings is equal to the new local time;
- if the new synchronized local time is greater than or equal to the last time-stamping time (LastTimestamp), the time used as time-stamping time for the next event recordings is equal to the new local time.

2. Method according to Claim 1, **characterized in that** the increment span is equal to a millisecond.

3. Method according to one of the preceding claims, **characterized in that** the cycle time is equal to five milliseconds.

4. Method according to one of the preceding claims, **characterized in that** the increment span corresponds to the resolution of the inherent local clock.

5. System comprising at least one device for recording time-stamped events comprising a local clock, said system comprising a reference clock, as well as means for synchronizing said local clock to said reference clock, **characterized in that** it comprises means for implementing the method according to any one of Claims 1 to 4.

6. System according to Claim 5, said system being moreover connected to a time server of SNTP type, for Simple Network Time Protocol according to the usual English acronym, synchronized to the GPS time, that is to say the time given by the GPS, for Global Positioning System according to the English acronym, satellite navigation system, and the reference clock exhibiting the GPS time as reference time (Tref).

7. System according to Claim 5, **characterized in that** it comprises means for receiving GPS messages, that is to say messages emitted by the GPS, for Global Positioning System according to the English acronym, satellite navigation system, and means for decoding these GPS messages so as to extract therefrom the GPS time, the reference clock exhibiting the GPS time as reference time (Tref).

8. System according to one of Claims 5 to 7, comprising a plurality of local clocks.
